(19) Europäisches Patentamt

European Patent Office

Office européen des brevets

(11) **EP 1 455 425 B1**

(12) **FASCICULE DE BREVET EUROPEEN**

(45) Date de publication et mention
de la délivrance du brevet:
**10.08.2005 Bulletin 2005/32**

(51) Int Cl.[7]: **H01S 3/063**, G02B 6/16

(21) Numéro de dépôt: **04290500.0**

(22) Date de dépôt: **25.02.2004**

(54) **Fibre optique amplificatrice à anneau dope et amplificateur contenant une telle fibre**

Verstärkende optische Faser mit ringförmiger Anordung der Dotierung und Verstärker mit einer derartigen Faser

Amplifying optical fibre with a ring shaped doping and amplifier using the same

(84) Etats contractants désignés:
**AT BE BG CH CY CZ DE DK EE ES FI FR GB GR HU IE IT LI LU MC NL PT RO SE SI SK TR**

(30) Priorité: **04.03.2003 FR 0302602**

(43) Date de publication de la demande:
**08.09.2004 Bulletin 2004/37**

(73) Titulaire: **ALCATEL**
**75008 Paris (FR)**

(72) Inventeurs:
• **Bourova, Ekaterina**
**92100 Boulogne-Billancourt (FR)**
• **Simonneau, Christian**
**92160 Antony (FR)**
• **Martinelli, Catherine**
**91120 Palaiseau (FR)**
• **Provost, Lionel**
**91460 Marcoussis (FR)**

(74) Mandataire: **Fournier, Michel Robert Marie et al**
**COMPAGNIE FINANCIERE ALCATEL**
**Département Propriété Industrielle**
**54, rue La Boétie**
**75008 Paris (FR)**

(56) Documents cités:
EP-A- 1 043 815          WO-A-98/25326
US-A- 5 778 129

• **LEE JAEDEUK ET AL: "Coaxial-core erbium-doped fibre amplifiers for self-regulation of gain spectrum" ELECTRONICS LETTERS, IEE STEVENAGE, GB, vol. 34, no. 19, 17 septembre 1998 (1998-09-17), pages 1852-1854, XP006010352 ISSN: 0013-5194**
• **STRUTZ S J ET AL: "Low-noise hybrid erbium/Brillouin amplifier" ELECTRONICS LETTERS, IEE STEVENAGE, GB, vol. 36, no. 16, 3 août 2000 (2000-08-03), pages 1359-1360, XP006015570 ISSN: 0013-5194**

## Description

La présente invention concerne le domaine des télécommunications par fibre optique. Plus précisément, l'invention a pour objet une fibre optique amplificatrice à anneau dopé, ainsi qu'un amplificateur contenant une telle fibre.

De manière connue, on cherche accroître les performances des amplificateurs optiques à fibre dopée à l'erbium. Ces amplificateurs, dits EDFA (pour "Erbium Doped Fiber Amplifier" en anglais), sont généralement utilisés le long des liaisons optiques à longues distances pour amplifier des signaux multiplexés en longueur d'onde.

Les fibres sont conçues pour obtenir une amplification la plus efficace possible, sur une bande de longueurs d'onde la plus large possible ou sur plusieurs bandes telles que la bande C (1530 - 1565 nm) ou la bande L (1565 - 1625 nm).

Le document intitulé "30% power conversion efficiency from a ring-doping all-silica octagonal Yb-free double-clad fiber for WDM applications in C-band" P. Bousselet et autres, Optical Amplifiers and Their Applications Conference, PD1, 2001 Technical Digest, Optical Society of America, pages 2-4 divulgue un amplificateur EDFA incorporant une fibre optique amplificatrice à base de silice. Plus précisément, la fibre optique présente la structure suivante :

- un coeur monomode, région centrale de diamètre égal à 7 μm,
- un coeur multimode, région intermédiaire entourant la région centrale et de diamètre externe égal à 44 μm, ce coeur multimode contenant une couche dopée en ions actifs erbium, dite anneau dopé,
- une gaine, région extérieure entourant la région intermédiaire, de diamètre externe égal à 150 μm environ.

L'amplificateur EDFA comporte en outre une pompe multimode, de puissance égale à 2,3 W, délivrant une onde de pompe de longueur d'onde égale à 980 nm, et couplée à la fibre amplificatrice par une fibre multimode et un multiplexeur en longueur d'onde. Pour leur amplification, des signaux optiques multiplexés, de longueur d'onde dans la bande C, sont injectés dans la fibre amplificatrice.

L'amplificateur EDFA divulgué possède un gain augmenté dans la bande C par rapport aux amplificateurs EDFA classiques du fait d'un meilleur rendement de conversion de cette fibre amplificatrice à anneau dopé erbium.

L'objet de la présente invention est de concevoir un amplificateur à fibre, compact et intégré, peu onéreux et ayant des performances encore améliorées en termes d'efficacité, de niveau d'amplification, de nombre de canaux (élargissement de la bande C et/ou L ou nouvelles plages de gain...), et de qualité des signaux amplifiés (faible niveau de bruit, faible dépendance des variations de la puissance de pompe...).

Pour cela, l'invention vise à rendre possible la fabrication d'un amplificateur hybride utilisant utilement à la fois l'effet Raman et les propriétés d'amplification des ions actifs terre rare tels que les ions d'erbium. L'amplificateur bénéficiera alors des avantages réunis de deux techniques d'amplification.

Il est au préalable rappelé quelques définitions de paramètres impliqués dans l'invention.

En première approximation, l'efficacité Raman Cr d'une fibre est définie par l'équation :

$$Log(Pon/Poff) = Cr.Pp.L,$$

Où Log est le logarithme népérien, L est la longueur de la fibre, Pp est la puissance d'une onde de pompe Raman injectée dans la fibre, Pon est une puissance optique à la sortie de la fibre d'un signal optique ayant traversé la fibre en présence de l'onde de pompe et Poff une puissance optique à la sortie de la fibre de ce même signal optique ayant traversé la fibre en l'absence de l'onde de pompe.

Une autre façon d'exprimer la relation précédente fait intervenir le gain "on-off" Raman Gonoff qui, exprimé en dB, peut être estimé, pour un amplificateur de courte longueur et si l'atténuation de la pompe Raman est faible (inférieure à 2 dB/km), par la formule :

$$Gonoff = 10 \log(Pon/Poff) = 4{,}34 \, Cr.Pp.L,$$

où log est le logarithme décimal.

L'efficacité Raman Cr s'exprime en $W^{-1}km^{-1}$ et peut être comprise par exemple entre 0,5 et 5 $W^{-1}km^{-1}$.

Par ailleurs, la présence des ions actifs terre rare dans une fibre implique que la fibre présente une absorption pour un signal optique injecté la traversant. Si une onde de pompe appropriée est injectée, la fibre est aussi le siège d'émission stimulée, et la différence entre l'émission et l'absorption constitue le gain de la fibre dopée. Cette absorption est définie par un coefficient d'absorption exprimé en dB/m qui présente en fonction de la longueur d'onde du signal une valeur maximale dite maximum d'absorption. Ce maximum d'absorption s'exprime aussi en dB/m et est défini comme le pic d'absorption. Ce pic d'absorption est obtenu pour une longueur d'onde (autour de 1530 nm pour l'erbium par exemple) qui correspond sensiblement au maximum d'émission.

Ainsi, la présente invention propose une fibre optique amplificatrice à anneau dopé comprenant :

- un coeur monomode de diamètre donné,
- un coeur multimode entourant le coeur monomode et contenant une couche dopée, dite anneau dopé, ayant une certaine concentration en ions actifs terre rare, la fibre étant apte grâce aux ions actifs terre rare à une amplification d'un signal optique à injecter dans la fibre amplificatrice,

caractérisée en ce que ladite fibre a une longueur et une efficacité Raman telles que le produit de ladite longueur par ladite efficacité Raman est supérieur ou égal à 0,5 $W^{-1}$, et en ce que, ladite fibre présentant pour un signal optique injecté une absorption due à la présence des ions actifs terre rare, cette absorption étant définie par un coefficient d'absorption exprimé en dB/m qui présente en fonction de la longueur d'onde dudit signal une valeur maximale dite maximum d'absorption, l'absorption cumulée, qui correspond au produit de ladite longueur par ledit maximum d'absorption, est supérieure ou égale à 100 dB.

L'invention revient à choisir pour une efficacité Raman donnée, une longueur suffisamment longue pour obtenir un gain Raman appréciable, à une puissance de pompe Raman limitée, et une absorption cumulée adaptée au niveau souhaitée du gain d'amplification par ions terre rare. La condition sur l'absorption cumulée donne aussi implicitement une valeur limite à la longueur de fibre qui permette l'existence d'un gain par ions terre rare, sachant qu'un tel gain diminue puis disparaît si on augmente la longueur de fibre au delà d'une certaine limite.

Aussi, le maximum d'absorption, la longueur de la fibre, l'efficacité Raman sont des paramètres couplés, judicieusement sélectionnés pour rendre efficace deux types d'amplification.

Il conviendra du moins que la longueur de fibre ne soit pas de longueur exagérée. La longueur sera aussi suffisamment petite de sorte que l'amplification grâce aux ions actifs terre rare permette un gain au moins égal à 1dB. De préférence, on choisira bien sûr une longueur permettant un gain bien supérieur, sachant par exemple qu'une amplification par ions erbium permettrait dans ces conditions d'atteindre un gain de l'ordre de 60 dB en prévoyant une puissance de pompe erbium suffisante.

Les deux types de gain se cumulent au sens où ils peuvent s'ajouter lorsqu'ils interviennent sur une plage de longueurs d'onde commune ou permettent l'amplification de signaux optiques sur deux plages distinctes ne se recouvrant pas.

Par exemple le gain Raman peut correspondre à au moins 10% du gain erbium.

Une absorption cumulée d'environ 100 dB à 1530 nm, permet par exemple d'obtenir un gain par amplification erbium d'environ 20 dB sur la bande C.

En outre, pour obtenir par exemple 2 dB de gain Raman, avec 1 W de pompe, il faut une longueur de fibre d'environ 1 km pour une fibre la moins efficace et d'environ 100 m pour la fibre la plus efficace. Naturellement, une plus grande longueur permet encore plus de gain Raman sans augmenter la puissance de pompe requise.

Dans un premier mode de réalisation de l'invention, la longueur est supérieure ou égale à 100 m et le maximum d'absorption est inférieur ou égal à 1 dB/m.

La longueur est ajustée et plus précisément augmentée par rapport à celle des fibres amplificatrices à anneau dopé de l'art antérieur, ceci pour favoriser l'effet Raman. Inversement, le maximum d'absorption est ajusté et plus précisément diminué par rapport à celui des fibres amplificatrices à anneau dopé de l'art antérieur.

Toutefois, l'amplification Raman selon l'invention est discrète car elle se réfère à l'effet Raman intervenant sur une longueur relativement courte dans une fibre amplificatrice d'un amplificateur. Cette amplification se distingue d'une amplification Raman couramment dite distribuée réalisée directement dans une fibre de ligne et relative à l'effet Raman mis en oeuvre sur une plus grande longueur d'amplification.

De préférence, l'efficacité Raman peut être supérieure ou égale à 3 $W^{-1}km^{-1}$ pour obtenir une fibre relativement courte.

Selon une caractéristique, le rayon interne de l'anneau dopé peut être supérieur à 1,5 µm pour ajuster le maximum d'absorption dans la gamme de valeurs souhaitées.

Selon une autre caractéristique, la concentration en ions actifs terre rare est choisie inférieure ou égale à 1000 ppm et, lorsque les ions terre rare sont des ions d'erbium, inférieure ou égale à 300 ppm, une concentration dans ces plages permettant également d'ajuster le maximum d'absorption dans la gamme de valeurs souhaitées.

La concentration en ions actifs terre rare est réduite par rapport à la concentration usuelle dans les fibres amplificatrices à anneau dopé connues.

Le choix de la concentration en ions actifs terre rare dépend du choix de la terre rare et de la position de l'anneau dopé. Par exemple, en choisissant de l'ytterbium, la concentration maximale acceptable en ions actifs terre rare est supérieure à celle de l'erbium. En outre cette concentration dépend aussi de la valeur de la longueur : elle est d'autant plus faible que la longueur est choisie grande.

Par ailleurs, le choix des indices de réfraction du coeur monomode et du coeur multimode n'est pas sans influence. Plus précisément, le coeur monomode ayant au moins un premier indice de réfraction et le coeur multimode ayant au moins un deuxième indice de réfraction, la différence entre le premier indice de réfraction et le deuxième indice de réfraction est de préférence supérieure ou égale à 0,01. Par ailleurs, le diamètre du coeur monomode peut être choisi entre 3 µm et 5 µm.

Une différence d'indice de réfraction suffisamment élevée et un diamètre de coeur réduit permettent de renforcer le caractère monomode du coeur central et donc confinent davantage le mode fondamental de l'onde de pompe Raman et des signaux multiplexés injectés dans la fibre, ce qui conduit à une efficacité Raman renforcée.

Dans un mode de réalisation préféré, le coeur monomode est à base de silice ou de verre fluoré et est dopé par des dopants choisis parmi le phosphore, le germanium, le tellure, l'aluminium et le bore. Ces dopants contribuent à une efficacité Raman élevée.

Dans un mode de réalisation préféré, l'anneau dopé terre rare est à base de silice ou de verre fluoré et est dopé par des dopants additionnels choisis parmi les composés suivants : $Li_2O$, $Na_2O$, $K_2O$, $Rb_2O$, $Cs_2O$, BeO, MgO, CaO, SrO et BaO. Ces dopants additionnels renforcent l'amplification par ions terre rare.

Lorsque l'anneau est en verre fluoré, les ions actifs terre rare peuvent être de préférence des ions de thulium.

Naturellement, la présente invention a également pour objet un amplificateur pour signal optique, comportant :

- une fibre optique amplificatrice à anneau dopé,
- une pompe multimode, couplée à ladite fibre, pour une amplification par ions actifs terre rare,

caractérisé en ce que la fibre optique amplificatrice est définie telle que précédemment, et en ce qu'il comporte au moins une pompe monomode, couplée à la fibre optique amplificatrice, pour une amplification Raman cumulée à ladite amplification par ions actifs terre rare.

Dans un mode de réalisation préféré, la longueur d'onde de la pompe monomode peut être choisie pour élargir le spectre de gain obtenu par les ions actifs terre rare.

Dans un autre mode de réalisation préféré, la longueur d'onde de la pompe monomode est choisie dans la gamme des longueurs d'onde dans laquelle un gain est obtenu par les ions actifs terre rare. La longueur d'onde de la pompe monomode peut de cette façon bénéficier de l'amplification par ions actifs terre rare, par exemple elle est choisie vers 1560 nm pour l'erbium. Cette amplification de la pompe Raman compense sa perte d'énergie et permet l'augmentation du gain Raman.

Ce gain Raman, suivant les configurations, va intervenir dans une plage de longueurs d'onde ayant une zone commune avec la plage du gain obtenu par ions terre rare ou située en dehors de la plage du gain obtenu par ions terre rare. Par exemple, le gain Raman peut intervenir autour de 1600 nm conjugué à une amplification par erbium en bande C.

Naturellement, dans cette dernière configuration, si des signaux optiques présentant des longueurs d'onde dans la plage d'amplification sont également injectés dans la fibre, la longueur d'onde de la pompe monomode est choisie entre deux de ces canaux.

Les particularités et avantages de l'invention apparaîtront clairement à la lecture de la description qui suit, faite à titre d'exemple illustratif et non limitatif et faite en référence aux figures annexées dans lesquelles :

- la figure 1 représente schématiquement un amplificateur de signaux optiques multiplexés en longueur d'onde dans un mode de réalisation préféré de l'invention,
- la figure 2 représente le profil du gain en fonction de la longueur d'onde respectivement d'un amplificateur à EDF de l'art antérieur et de l'amplificateur de la figure 1,
- la figure 3a représente une vue partielle longitudinale et en perspective de la fibre amplificatrice de la figure 1,
- la figure 3b représente le profil d'indice de réfraction du coeur monomode et du coeur multimode de la fibre, en fonction de la distance x au centre de la fibre.

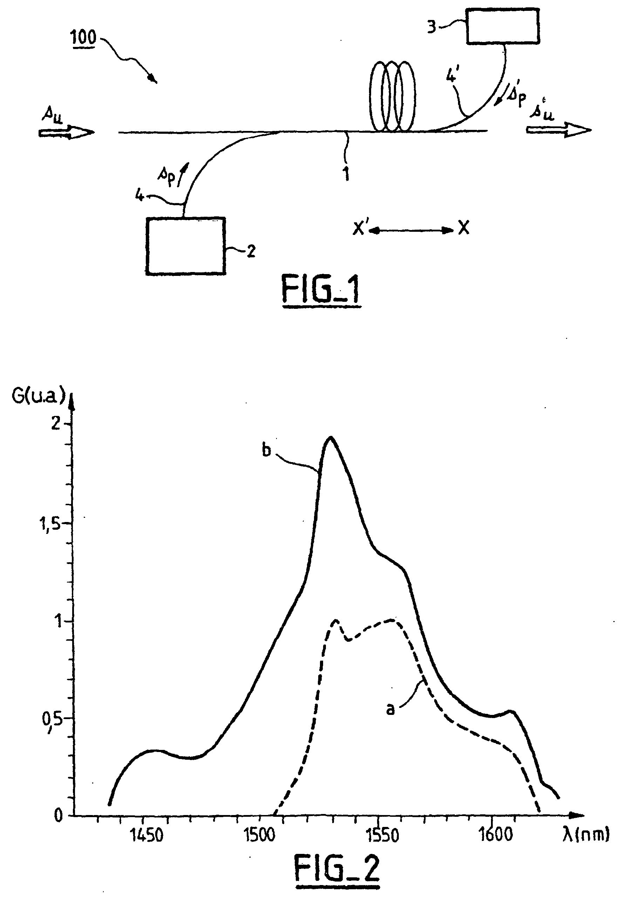

La figure 1 représente schématiquement, dans un mode de réalisation préféré de l'invention, un amplificateur 100 de signaux optiques multiplexés en longueur d'onde $s_u$ par exemple dans la bande C élargie allant de 1500 à 1565 nm.

L'amplificateur comporte une fibre optique amplificatrice 1 conforme à l'invention, à anneau dopé avec des ions actifs terre rare qui sont de préférence l'erbium. La fibre optique amplificatrice 1, de structure plus détaillée ultérieurement, est en une matrice de verre et de préférence à base de silice, possède un coeur monomode et un coeur multimode. Sa longueur est suffisamment élevée pour assurer une amplification Raman discrète efficace.

L'amplificateur 100 comporte également :

- une pompe multimode 2 pour l'amplification par l'erbium, de puissance entre 1 et 10 W et délivrant une première onde de pompe $s_p$ de longueur d'onde égale à 980 nm,
- une pompe monomode 3 pour l'amplification Raman, de puissance de l'ordre de 100 mW à 5 W et délivrant une deuxième onde de pompe $s'_p$ de longueur d'onde par exemple égale à 1428 nm environ pour obtenir une amplification Raman en début de bande C.

La pompe multimode 2 est couplée à une fibre multimode 4 qui est elle-même couplée, vers l'entrée 1 a de la fibre 1. En outre, la pompe monomode 3 est couplée à une fibre monomode 4' qui est elle-même couplée vers la sortie 1 b de la fibre 1.

Dans la fibre amplificatrice 1, les signaux $s_u$ et la première onde de pompe $s_p$ sont copropagatifs (dans le sens de l'axe X) tandis que la deuxième onde de pompe $s'_p$ est contra propagative (dans le sens de l'axe X').

En outre, les signaux $s_u$ et la deuxième onde de pompe $s'_p$ sont guidés dans le coeur monomode.

L'amplificateur 100 est compact car il n'utilise qu'une seule fibre amplificatrice pour les deux techniques d'amplification. L'amplificateur 100 est en outre économe en puissance de pompe Raman.

Les courbes a, b montrant le profil du gain en fonction de la longueur d'onde respectivement d'un amplificateur à EDF à anneau dopé classique muni d'une pompe multimode analogue à la pompe 2 et de l'amplificateur 100, sont représentées sur la figure 2.

Le gain de l'amplificateur 100 est manifestement augmenté entre 1500 nm et 1600 nm et permet en outre une amplification de signaux optiques sur une plus large gamme de longueur d'onde par le choix de la longueur d'onde de la pompe monomode à 1428 nm.

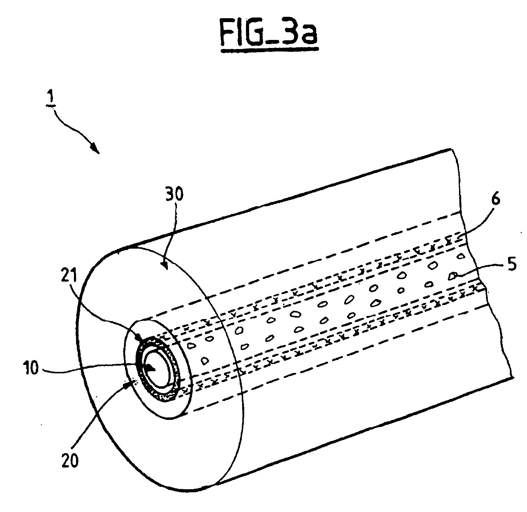

La figure 3a représente une vue partielle longitudinale et en perspective de la fibre optique amplificatrice 1. La figure 3a, schématique, n'est pas à l'échelle.

La fibre optique amplificatrice 1, par exemple à géométrie cylindrique comporte :

- un coeur monomode 10, de faible diamètre d1 de préférence égal à 3 μm, et de premier indice de réfraction n1,
- un coeur multimode 20 entourant le coeur monomode 10 et de deuxième indice de réfraction n2 variable et de diamètre externe d2 par exemple égal à 30 μm environ,
- une gaine 30 entourant le coeur multimode, de diamètre externe entre 150 μm et 200 μm de troisième indice de réfraction $n_g$, avec la relation $n1 > n2 \geq n_g$.

Le coeur monomode 10 contient des dopants germanium 5 augmentant le gain Raman classique obtenue par la silice.

L'efficacité Raman est égale à environ 4 $W^{-1}km^{-1}$.

Le coeur multimode 20 contient une couche 21 dite anneau, dopée en ions erbium 6 à la concentration c1. Cette couche à circonférence sensiblement circulaire présente un rayon interne $r_i$ et un rayon externe $r_e$.

La concentration et la position de l'anneau sont ajustées pour obtenir un maximum absorption inférieur à 1 dB/m.

De préférence, la longueur est égale à 500 m, le maximum d'absorption est égal à 0,2 dB/m et l'absorption cumulée égale à 100 dB.

Ainsi, la concentration c1 est inférieure à 300 ppm et de préférence de l'ordre de 100 ppm pour l'amplification Raman. Le rendement de conversion pour l'amplification par l'erbium est élevé du fait de la répartition de l'erbium 6 dans l'anneau dopé.

En outre, le rayon interne $r_i$ est égal 4,25 μm environ tandis que le rayon externe $r_e$ est égal à 6,5 μm environ.

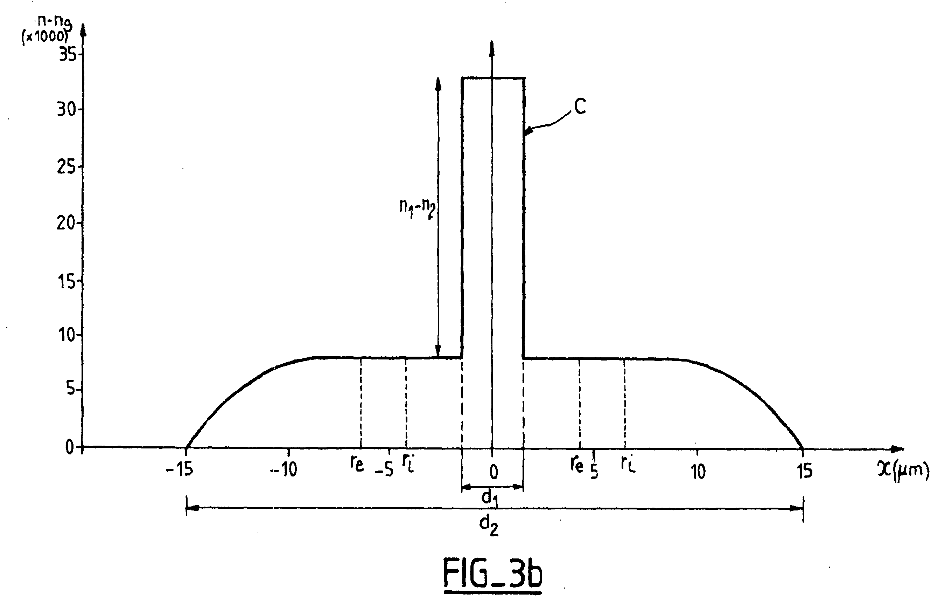

La courbe c montrant le profil des premier et deuxième indice de réfraction n1, n2 en fonction de la distance x au centre de la fibre (en microns) est représentée en figure 3b. Plus exactement, l'ordonnée correspond à la différence $n - n_g$ entre le premier indice de réfraction n1 et le troisième indice de réfraction $n_g$ et à la différence entre le deuxième indice de réfraction n2 et le troisième indice de réfraction $n_g$.

Les diamètres d1 et d2, les rayons internes et externes $r_i$ et $r_e$ de l'anneau dopé sont référencés sur la courbe c.

Le deuxième indice de réfraction n2 décroît entre l'intérieur et l'extérieur du coeur multimode. Plus précisément, le deuxième indice de réfraction n2 est sensiblement constant jusqu'à 6 μm environ puis décroît jusqu'à 15 μm. La différence entre les premier et deuxième indices de réfraction n1 et n2 est toujours supérieure à 0,01.

Bien entendu, l'invention n'est pas limitée au mode de réalisation qui vient d'être décrit.

Dans une variante, le coeur monomode 10 contient des dopants phosphore au lieu (ou en addition) des dopants germanium pour augmenter le gain Raman notamment en bordure inférieure de la bande C. Dans cette variante, la longueur d'onde d'une pompe Raman choisie en conséquence est égale à 1305 nm environ.

Dans une autre variante, la longueur d'onde d'une pompe Raman est non seulement distincte d'une longueur d'onde de tout signal optique à amplifier mais en outre choisie dans la plage de gain obtenu par les ions actifs terre rare, pour amplifier l'onde de pompe monomode Raman.

La section transverse de la fibre peut présenter pour le coeur multimode une géométrie cylindrique, sensiblement polygonale ou multilobée de manière à favoriser une meilleure absorption de la puissance optique par l'anneau dopé terre rare.

L'invention s'applique aussi pour la bande L ou toute autre bande.

La fibre peut aussi être réalisée à base de verre fluoré.

L'anneau dopé erbium peut contenir des dopants additionnels parmi les suivants : $Li_2O$, $Na_2O$, $K_2O$, $Rb_2O$, $Cs_2O$, BeO, MgO, CaO, SrO et BaO.

Enfin, on pourra remplacer tout moyen par un moyen équivalent sans sortir du cadre de l'invention.

**Revendications**

1. Fibre optique amplificatrice à anneau dopé (1), comprenant :

   - un coeur monomode (10) de diamètre donné (d1),
   - un coeur multimode (20) entourant le coeur monomode et contenant une couche dopée (21), dite anneau dopé, ayant une certaine concentration (c1) en ions actifs terre rare (6), la fibre étant apte grâce aux ions actifs terre rare à une amplification d'un signal optique ($s_u$) à injecter dans la fibre amplificatrice,

**caractérisée en ce que** ladite fibre a une longueur et une efficacité Raman telles que le produit de ladite longueur par ladite efficacité Raman est supérieure ou égal à 0,5 $W^{-1}$, et **en ce que**, ladite fibre présentant pour un signal optique ($s_u$) injecté une absorption due à la présence des ions actifs terre rare, cette absorption étant définie par un coefficient d'absorption exprimé en dB/m qui présente en fonction de la longueur d'onde dudit signal une valeur maximale dite maximum d'absorption, l'absorption cumulée, qui correspond au produit de ladite longueur par ledit maximum d'absorption, est supérieure ou égale à 100 dB.

2. Fibre optique amplificatrice (1) selon la revendication 1, **caractérisée en ce que** ladite longueur est suffisamment petite pour que ladite amplification grâce aux ions actifs terre rare permette un gain au moins égal à 1 dB.

3. Fibre optique amplificatrice (1) selon l'une des revendications 1 ou 2, **caractérisée en ce que** le maximum d'absorption est inférieur ou égal à 1 dB/m et la longueur est supérieure ou égale à 100 m.

4. Fibre optique amplificatrice (1) selon l'une des revendications 1 à 3, **caractérisée en ce que** l'efficacité Raman est supérieure ou égale à 3 $W^{-1}km^{-1}$.

5. Fibre optique amplificatrice (1) selon l'une des revendications 1 à 4, **caractérisée en ce que** ledit anneau dopé présente un rayon interne ($r_i$) supérieur à 1,5 µm.

6. Fibre optique amplificatrice (1) selon l'une des revendications 1 à 5, **caractérisée en ce que** la concentration en ions actifs terre rare (c1) est choisie inférieure ou égale à 1000 ppm et, lorsque les ions terre rare (6) sont des ions d'erbium, inférieure ou égale à 300 ppm.

7. Fibre optique amplificatrice (1) selon l'une des revendications 1 à 6, **caractérisée en ce que** le coeur monomode (10) ayant au moins un premier indice de réfraction (n1) et le coeur multimode (20) ayant au moins un deuxième indice de réfraction (n2), la différence entre le premier indice de réfraction (n1) et le deuxième indice de réfraction (n2) est supérieure ou égale à 0,01.

8. Fibre optique amplificatrice (1) selon l'une des revendications 1 à 7, **caractérisée en ce que** le diamètre (d1) du coeur monomode (10) est choisi entre 3 µm et 5 µm.

9. Fibre optique amplificatrice selon l'une des revendications 1 à 8, **caractérisée en ce que** le coeur monomode (10) est à base de silice ou de verre fluoré et est dopé par des dopants (5) choisis parmi le phosphore, le germanium, le tellure, l'aluminium et le bore.

10. Fibre optique amplificatrice selon l'une des revendications 1 à 9, **caractérisée en ce que** l'anneau dopé terre rare est à base de silice ou de verre fluoré et est dopé par des dopants additionnels choisis parmi les composés suivants : $Li_2O$, $Na_2O$, $K_2O$, $Rb_2O$, $Cs_2O$, BeO, MgO, CaO, SrO et BaO.

11. Amplificateur (100) pour signal optique ($s_u$), comportant :

    - une fibre optique amplificatrice à anneau dopé (1),
    - une pompe multimode (2), couplée à ladite fibre, pour réaliser une amplification par des ions actifs terre rare,

    **caractérisé en ce que** la fibre optique amplificatrice est définie selon l'une des revendications 1 à 10, et **en ce qu'**il comporte au moins une pompe monomode (3), couplée à la fibre optique amplificatrice, pour réaliser une amplification Raman cumulée à ladite amplification par les ions actifs terre rare.

12. Amplificateur (100) selon la revendication 11, **caractérisé en ce que** la longueur d'onde de la pompe monomode (3) est choisie pour élargir le spectre de gain obtenu par les ions actifs terre rare.

13. Amplificateur selon la revendication 11, **caractérisé en ce que** la longueur d'onde de la pompe monomode est choisie dans la gamme des longueurs d'onde dans laquelle un gain est obtenu par les ions actifs terre rare.

## Claims

1. A doped ring amplifying optical fiber (1) comprising:

    - a single-mode core (10) of given diameter d1; and
    - a multimode core (20) surrounding the single-mode core and containing a doped layer (21) referred to as a "doped ring", having a certain concentration (c1) of active rare earth ions (6), the fiber being suitable, because of the active rare earth ions, for amplifying an optical signal ($s_u$) for injection into the amplifying fiber;

    the fiber being **characterized in that** it is of a length and has Raman efficiency such that the product of said length multiplied by said Raman efficiency is greater than or equal to 0.5 $W^{-1}$, and **in that**, for said fiber presenting absorption for an injected

optical signal ($s_u$) due to the presence of active rare earth ions, said absorption being defined by an absorption coefficient expressed in dB/m and presenting a maximum value as a function of the wavelength of said signal, which value is referred to as the absorption maximum, said fiber presents accumulated absorption, corresponding to the product of said length multiplied by said absorption maximum, which is greater than or equal to 100 dB.

2. An amplifying optical fiber (1) according to claim 1, **characterized in that** said length is short enough for said amplification by said active rare earth ions to enable gain of not less than 1 dB.

3. An amplifying optical fiber (1) according to claim 1 or claim 2, **characterized in that** the absorption maximum is less than or equal to 1 dB/m and the length is greater than or equal to 100 m.

4. An amplifying optical fiber (1) according to any one of claims 1 to 3, **characterized in that** the Raman efficiency is greater than or equal to 3 $W^{-1}km^{-1}$.

5. An amplifying optical fiber (1) according to any one of claims 1 to 4, **characterized in that** said doped ring presents an inner radius ($r_i$) greater than 1.5 $\mu$m.

6. An amplifying optical fiber (1) according to any one of claims 1 to 5, **characterized in that** the concentration ($c1$) of active rare earth ions is selected to be lower than or equal to 1000 ppm, and when the rare earth ions (6) are erbium ions, to be lower than or equal to 300 ppm.

7. An amplifying optical fiber (1) according to any one of claims 1 to 6, **characterized in that** the single-mode core (10) having at least a first refractive index (n1) and the multimode core (20) having at least a second refractive index (n2), the difference between the first and second refractive indices (n1, n2) is greater than or equal to 0.01.

8. An amplifying optical fiber (1) according to any one of claims 1 to 7, **characterized in that** the diameter (d1) of the single-mode core (10) is selected to lie in the range 3 $\mu$m to 5 $\mu$m.

9. An amplifying optical fiber (1) according to any one of claims 1 to 8, **characterized in that** the single-mode core (10) is based on silica or on fluoride glass and is doped by dopants (5) selected from phosphorous, germanium, tellurium, aluminum, and boron.

10. An amplifying optical fiber (1) according to any one of claims 1 to 9, **characterized in that** the rare earth doped ring is based on silica or fluoride glass and is doped by additional dopants selected from the following compounds: $Li_2O$, $Na_2O$, $K_2O$, $Rb_2O$, $Cs_2O$, BeO, MgO, CaO, SrO, and BaO.

11. An amplifier (100) for amplifying an optical signal ($s_u$), the amplifier comprising:

    - a doped ring amplifying optical fiber (1); and
    - a multimode pump (2) coupled to said fiber perform amplification by active rare earth ions,

    the amplifier being **characterized in that** the amplifying optical fiber is as defined in any one of claims 1 to 10, and **in that** it includes at least one single-mode pump (3) coupled to the amplifying optical fiber to perform Raman amplification in addition to said amplification by the active rare earth ions.

12. An amplifier (100) according to claim 11, **characterized in that** the wavelength of the single-mode pump (3) is selected to enlarge the gain spectrum obtained by the active rare earth ions.

13. An amplifier according to claim 11, **characterized in that** the wavelength of the single-mode pump is selected to lie in the range of wavelengths in which gain is obtained by the active rare earth ions.


**Patentansprüche**

1. Verstärkende optische Faser mit ringförmiger Dotierung (1), bestehend aus:

    - einem Monomodekern (10) mit gegebenem Durchmesser (d1),
    - einem Multimodekern (20), der den Monomodekern umgibt und eine dotierte Schicht (21) enthält, die so genannte ringförmige Dotierung, die eine bestimmte Konzentration ($c1$) an aktiven Ionen seltener Erden (6) aufweist, wobei die Faser dank der aktiven Ionen seltener Erden in der Lage ist, ein optisches Signal ($s_u$) zu verstärken, das in die verstärkende Faser injiziert werden soll,

    **dadurch gekennzeichnet, dass** die genannte Faser eine Länge und eine Raman-Verstärkung aufweist, so dass das Produkt aus der genannten Länge und der genannten Raman-Verstärkung über oder gleich 0,5 $W^{-1}$ beträgt, sowie **dadurch**, dass die genannte Faser für ein injiziertes optisches Signal ($s_u$) eine Absorption aufgrund der Anwesenheit von aktiven Ionen seltener Erden aufweist, wobei diese Absorption als Absorptionskoeffizient in dB/m definiert ist, der in Abhängigkeit von der Wellenlänge des genannten Signals einen Höchstwert, das so genannte Absorptionsmaximum, aufweist, so dass die kumulierte Absorption, die das Produkt aus der genannten Länge und dem genannten Absorptionsmaximum entspricht, über oder gleich 100 dB beträgt.

2. Verstärkende optische Faser (1) gemäß Anspruch 1, **dadurch gekennzeichnet, dass** die genannte Länge ausreichend gering ist, so dass die genannte Verstärkung durch die aktiven Ionen seltener Erden einen Verstärkungsgrad von mindestens 1 dB gewährleistet.

3. Verstärkende optische Faser (1) gemäß Anspruch 1 oder 2, **dadurch gekennzeichnet, dass** das Absorptionsmaximum unter oder gleich 1 dB/m und die Länge über oder gleich 100 m beträgt.

4. Verstärkende optische Faser (1) gemäß einem der Ansprüche 1 bis 3, **dadurch gekennzeichnet, dass** die Raman-Verstärkung über oder gleich 3 $W^{-1}km^{-1}$ beträgt.

5. Verstärkende optische Faser (1) gemäß einem der Ansprüche 1 bis 4, **dadurch gekennzeichnet, dass** die genannte ringförmige Dotierung einen inneren Radius ($r_i$) über 1,5 μm aufweist.

6. Verstärkende optische Faser (1) gemäß einem der Ansprüche 1 bis 5, **dadurch gekennzeichnet, dass** die Konzentration an aktiven Ionen seltener Erden (c1) unter oder gleich 1000 ppm beträgt, bzw. wenn es sich bei den Ionen seltener Erden (6) um Erbium-Ionen handelt, unter oder gleich 300 ppm beträgt.

7. Verstärkende optische Faser (1) gemäß einem der Ansprüche 1 bis 6, **dadurch gekennzeichnet, dass** der Monomodekern (10) mindestens einen ersten Brechungskoeffizienten (n1) aufweist und der Multimodekern (20) mindestens einen zweiten Brechungskoeffizienten (n2) aufweist, wobei die Differenz zwischen dem ersten Brechungskoeffizienten (n1) und dem zweiten Brechungskoeffizienten (n2) über oder gleich 0,01 beträgt.

8. Verstärkende optische Faser (1) gemäß einem der Ansprüche 1 bis 7, **dadurch gekennzeichnet, dass** der Durchmesser (d1) des Monomodekerns (10) zwischen 3 μm und 5 μm gewählt wird.

9. Verstärkende optische Faser (1) gemäß einem der Ansprüche 1 bis 8, **dadurch gekennzeichnet, dass** der Monomodekern (10) auf Siliziumoxid- oder Fluorglasbasis ausgeführt ist und mit einem der folgenden Dotierungsstoffe (5) dotiert ist: Phosphor, Germanium, Tellur, Aluminium oder Bor.

10. Verstärkende optische Faser (1) gemäß einem der Ansprüche 1 bis 9, **dadurch gekennzeichnet, dass** die ringförmige Dotierung mit seltenen Erden auf Siliziumoxid- oder Fluorglasbasis ausgeführt ist und mit einem der im Folgenden aufgeführten, zusätzlichen Dotierungsstoffe dotiert ist: $Li_2O$, $Na_2O$, $K_2O$, $Rb_2O$, $Cs_2O$, BeO, MgO, CaO, SrO und BaO.

11. Verstärker (100) für ein optisches Signal ($s_u$), bestehend aus:

    - einer verstärkenden optischen Faser mit ringförmiger Dotierung (1),
    - einer Multimodepumpe (2), die mit der genannten Faser gekoppelt ist, zur Ausführung einer Verstärkung mittels aktiver Ionen seltener Erden,

    **dadurch gekennzeichnet, dass** die verstärkende optische Faser gemäß einem der Ansprüche 1 bis 10 definiert ist, sowie **dadurch**, dass sie mindestens eine Monomodepumpe (3) umfasst, die mit der verstärkenden optischen Faser gekoppelt ist, um eine Raman-Verstärkung auszuführen, die mit der genannten Verstärkung durch aktive Ionen seltener Erden kumuliert wird.

12. Verstärker (100) gemäß Anspruch 11, **dadurch gekennzeichnet, dass** die Wellenlänge der Monomodepumpe (3) so gewählt wird, dass sie den Verstärkungsbereich, der von den aktiven Ionen seltener Erden erzielt wird, erweitert.

13. Verstärker (100) gemäß Anspruch 11, **dadurch gekennzeichnet, dass** die Wellenlänge der Monomodepumpe innerhalb des Wellenlängenbereiches gewählt wird, in dem eine Verstärkung durch die aktiven Ionen seltener Erden erzielt wird.

FIG_1

FIG_2

# FIG_3a

FIG_3b

EP 1 455 425 B1